# EUROPEAN PATENT SPECIFICATION

(11) **EP 3 113 596 B1**
(45) Date of publication and mention of the grant of the patent: **19.05.2021**
(21) Application number: 14786790.7
(22) Date of filing: 13.10.2014
(51) Int. Cl.: A01B 29/04

(54) **AN AGRICULTURAL ROLLER RING AND A LAND PACKER COMPRISING A SET OF SUCH AGRICULTURAL ROLLER RINGS**
LANDWIRTSCHAFTLICHER WALZENRING UND UNTERGRUNDPACKER MIT EINER REIHE VON DERARTIGEN LANDWIRTSCHAFTLICHEN WALZENRINGEN
ANNEAU DE ROULEAU AGRICOLE ET CULTITASSEUR COMPRENANT UN ENSEMBLE DE CES ANNEAUX DE ROULEAU AGRICOLE

(30) Priority: 04.03.2014 DK 201470102
(43) Date of publication of application: 11.01.2017
(73) Proprietor: Dal-Bo A/S, 7183 Randboel (DK)
(72) Inventor: NATHANY, Amit, Kolkata 700071 (IN)
(74) Representative: Patrade A/S
(86) International application number: PCT/DK2014/050326
(87) International publication number: WO 2015/131901

(56) References cited:
- EP-A1- 2 386 196
- EP-A1- 2 386 197
- EP-A1- 2 868 178
- EP-A2- 2 433 481
- CN-Y- 201 376 451
- DE-A1- 2 439 595
- FR-A1- 2 547 696
- FR-A1- 2 938 726

## Description

### Field of the invention

The invention relates to an agricultural roller ring for packing the soil while pressing encountered stones in the soil, which ring comprises a hub part with a central hole for receiving a shaft, a rim part with an inner surface facing the hub part and an outer surface configured for packing the soil while pressing encountered stones in the soil, and a plurality of spokes, wherein each spoke has a body connecting the hub part and the rim part. Also, an embodiment of the invention relates to a land packer.

### Background of the invention

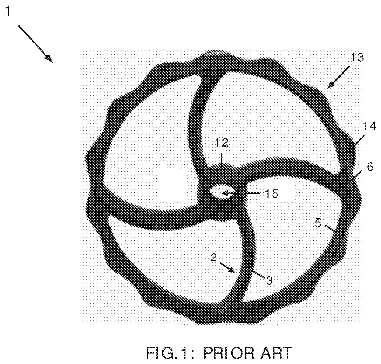

Typically, a plurality of roller rings sits on a shaft of a land packer driving on a field. A roller ring such as the one shown in FIG.1 is used for packing the soil while pressing encountered stones in the soil, thus avoiding that stones get into, e.g., a harvester when the latter is in operation. Basically, when a stone hits the ring, the ring drives on it and pushes it in the soil. However, such a roller ring has a short lifetime as the attachment points of the spokes at the ring tend to crack due to the frequency of the impacts with the stones. In order to make the ring more durable, reinforcements may be applied at the attachment points; nevertheless, this implies an increased weight and manufacturing cost for the whole construction.

FR 2547696 A1 discloses a roller ring with a central hub and a continuous outer ring having a plurality of transversely projecting flanges, where the outer ring is firmly integrally connected to the central hub via three U-shaped spokes. The opposite ends of this spoke are connected to the outer ring while the arc of the spoke is connected to the central hub at a centre point. These U-shaped spokes do not allow for an optimal load transfer between the outer ring and the central hub.

EP 2433481 A2 discloses a roller ring with a central hub and a continuous outer ring, wherein the outer ring is attached to the central hub by two or three elongated spokes projecting radially from the central hub. Each spoke comprise one or two mounting flanges which is mounted to the outer hub via fasteners. These fasteners define weak points and are likely to fail when encountered stones in the soil.

EP 2386196 A1 and EP 2386197 A1 both disclose a roller ring with a central hub and four elongated spokes welded to the central hub. The spokes of EP 2386197 A1 are each formed by flat elongated parts that are welded to and project radially from the central hub. The spokes of EP 2386196 A1 are each formed by two L-shaped elements bolted together. The L-shaped elements each has a central arc-shaped section that is clamped around the central hub when all L-shaped elements are bolted together.

The spokes in both EP 2386196 A1 and EP 2386197 A1 further comprise a mounting element at their free ends which has an open-ended recess for receiving the outer ring. The outer ring is formed as a spring loaded ring by two arc-shaped parts. Impacts from stones in the soil are absorbed by the spring-loaded ring so that only minimal loads are transferred to the bolted connections.

DE 2439595 A1 discloses an agricultural disk element comprising a plurality of arms projecting radially from the central hub, wherein the individual arms are interconnected via intermediate elongated supports. The free end of each arm extends beyond the supports and has a flat, tapered end profile. The supports are not intended to push stones into the soil upon impact, but merely to provide support for the radial arms.

EP 2868178 A1 discloses a roller ring formed by four U-shaped ring segments, where two adjacent ring segments are bolted to a mounting flange projecting from the central hub. The ring segments do not form a continuous outer ring and thus stones are able to get stuck at the intermediate spacing between ring segments.

CN 2013764511 Y discloses a wheel hub for an automobile, comprising a plurality of spokes each branching into two arms connected to the outer ring.

FR 2938426 A1 discloses an agricultural packer, comprising a shaft with a plurality of roller rings projecting from the shaft. Each roller ring comprises a plurality of X-shaped spokes connected to the shaft and the outer ring.

Hence, there is a need in the technical field of agricultural roller rings and land packers of overcoming the abovementioned drawbacks of the state-of-the-art solutions.

### Aspects of the invention

The first aspect of the invention is to provide an improvement to the state-of-the-art. The second aspect of the invention is to solve the abovementioned drawbacks of the prior art, i.e., that of providing an agricultural roller ring that is stronger and thereby has a longer lifetime than a conventional roller ring (ref. FIG.1) and a reinforced version of a conventional roller ring. At the same time, the aim of the invention is to provide a roller ring that is lighter and thereby less costly to manufacture than a reinforced version of a conventional roller ring.

### Description of the invention

The aforementioned aspects of the invention are achieved by an agricultural roller ring according to claim 1.

Herein, a spoke is defined as an elongated element extending from the center of the roller ring (i.e., the hub where the shaft of a land packer is mounted), connecting the center of the roller ring with an inner surface of the roller ring.

The invention has the advantage that the impact of the hit of a stone on the roller ring is distributed on the arms of a spoke. As a consequence, the roller ring of the invention is around 5-7 times stronger than a conventional roller ring and around 3 times stronger than a reinforced version of a conventional roller ring. At the same time, the roller ring of the invention is around 3 kg lighter than a reinforced version of a conventional roller ring. The above assessments have been made comparing roller rings having the same diameter.

Each spoke is Y-shaped. The two arms of the spoke may form an arch instead of extending in a diverging, straight manner from the body of the spoke. This Y-shape have the advantage that the number of arms is minimized, thus minimizing the complexity and the cost of manufacturing the roller ring while still achieving the abovementioned technical effects in terms of strength and weight.

The body is branched into two arms.

In the invention, each of the two arms is attached to the inner surface of the ring at an attachment point, a first radial line extends through a centre of the roller ring and one attachment point and a second radial line extends through the centre of the roller ring and the other attachment point, wherein the first and second radial lines form an angle ranges from 23 degrees to 28 degrees (e.g., 27 degrees in case of Ø 500 and 24 degrees in case of Ø 620). Correspondingly, in an embodiment of the invention, the distance between the two attachment points ranges between 80 mm to 120 mm (e.g., 96 mm in case of Ø 500 and 117 mm in case of Ø 620). Advantageously, said angle and said distance between the two attachment points increase with the diameter of the ring but, at the same time, are narrow enough to avoid cracks at the attachment points. This embodiment has the advantage that each spoke has a significantly stronger resistance to cracking.

In an embodiment of the invention, the number of spokes ranges from 2 to 10 spokes. Advantageously, the number of spokes increases with the diameter of the ring (e.g., 6 spokes in case of Ø 500 and 8 spokes in case of Ø 620). This embodiment has the advantage that the same strength is achieved regardless the diameter of the ring.

Also, the aforementioned aspects of the invention are achieved by a land packer according to claim 3.

Note that all the aforementioned advantages of the agricultural roller ring are also met by the land packer.

Hereafter, the invention will be described in connection with drawings illustrating nonlimiting examples of agricultural roller rings and land packers.

### Brief description of the drawings

FIG.1: PRIOR ART.
FIG.2: A roller ring with Y-shaped spokes.
FIG.3: A land packer with a plurality of sets of roller rings according to the invention.

### Notations

α: angle between two attachment points of the same spoke.
c: center of the roller ring.
d: distance between two attachment points of the same spoke.
D: diameter of the roller ring.
1: roller ring.
2: spoke.
3: Main body part of a spoke.
4: arms of a spoke.
5: inner surface of the rim part.
6: attachment point.
7: land packer.
8: set of roller rings.
9: shaft.
10: bracket.
11: frame.
12: hub part.
13: rim part.
14: outer surface of the rim part.
15: central hole of the hub part.

### Preferred embodiments of the invention

FIG. 1 shows an agricultural roller ring 1 according to the prior art. The roller ring 1 comprises: a hub part 12 with a central hole 15 for receiving a shaft 9 (not shown in FIG.1); a rim part 13 with an outer surface 14 for packing the soil; and four spokes 2, each spoke 2 having a body connecting the hub part 12 and the rim part 13 at an attachment point 6 at an inner surface 5 of the rim part 13.

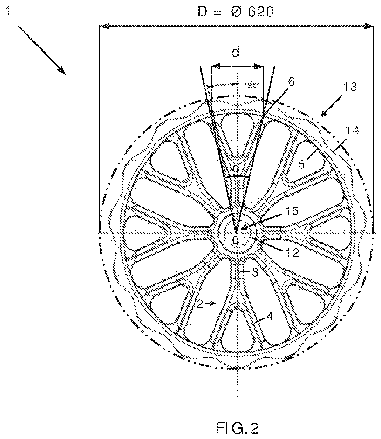

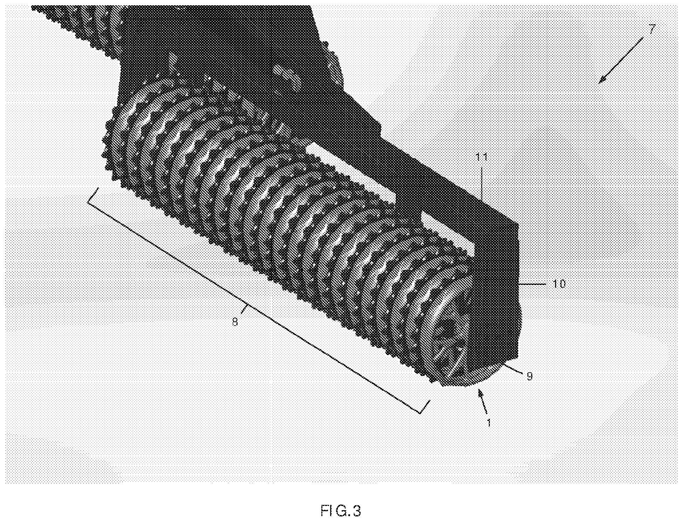

FIG.2 shows an agricultural roller ring 1 according to the invention. The roller ring 1 comprises a hub part 12 with a central hole 15 for receiving a shaft 9 (ref. FIG.3), a rim part 13 with an outer surface 14 for packing the soil and eight spokes 2. Each spoke 2 is Y-shaped; in fact, each spoke 2 has a body connecting the hub part 12 and the rim part 13, wherein the body has a main body part 3 which, in a direction towards the rim part 13, is branched into a plurality of arms 4 connecting the body 3 to an inner surface 5 of the rim part 13. Each of the two arms 4 is attached to the inner surface 5 of the ring 1 at an attachment point 6, wherein the angle *α* and the distance *d* between the two attachment points 6 are respectively 24 degrees and 117 mm.

FIG.3 shows a land packer 7 comprising a plurality of sets 8 of agricultural roller rings 1 as described above, wherein the roller rings 1 in each set 8 are mounted rotatably about a common central shaft 9 mounted on a bracket 10 attached to a frame 11 of the land packer 7. Advantageously, the bracket 10 may also be integral with the frame 11.

## Claims

1. An agricultural roller ring (1) for packing the soil while pressing encountered stones in the soil, which ring (1) comprises a hub part (12) with a central hole (15) for receiving a shaft (9), a rim part (13) with an inner surface (5) facing the hub part (12) and an outer surface (14) configured for packing the soil while pressing encountered stones in the soil, and a plurality of spokes (2), wherein each spoke (2) has a body connecting the hub part (12) and the rim part (13), the body of each spoke (2) has a main body part (3) connected to an outer surface of the hub part (12) and extending from the hub part (12) towards the rim part (13), the main body part (3) is branched into two arms (4) in a direction towards the rim part (13), each of the arms (4) extending from the main body part (3) towards the rim part (13) and is connected to the inner surface (5) of the rim part (13), wherein each of the two arms (4) is attached to the inner surface (5) of the rim part at an attachment point (6), a first radial line extends through a centre (c) of the roller ring (1) and one attachment point (6) and a second radial line extends through the centre of the roller ring (1) and the other attachment point (6), wherein the first and second radial lines form an angle (α) between the two attachment points (6) which ranges from 23 degrees to 28 degrees, **characterized in that** each spoke (2) is Y-shaped.

2. An agricultural roller ring (1) according to claim 1, **characterized in that** the number of spokes (2) ranges from 2 to 10 spokes (2).

3. A land packer (7), **characterized in that** said land packer (7) comprises a set (8) of agricultural roller rings (1) according to any of the preceding claims, wherein the agricultural roller rings (1) are mounted rotatably about a common central shaft (9) mounted on a frame (11) of the land packer (7).

## Patentansprüche

1. Landwirtschaftlicher Walzenring (1) zum Verdichten des Bodens und gleichzeitigem Drücken von angetroffenen Steinen in den Boden, wobei der Ring (1) einen Nabenteil (12) mit einem zentralen Loch (15) zum Aufnehmen einer Welle (9), einen Randteil (13) mit einer Innenfläche (5), die dem Nabenteil (12) zugewandt ist, und einer Außenfläche (14), die zum Verdichten des Bodens und gleichzeitigem Drücken von angetroffenen Steinen in den Boden konfiguriert ist, und eine Vielzahl von Speichen (2) umfasst, wobei jede Speiche (2) einen Körper aufweist, der den Nabenteil (12) und den Randteil (13) verbindet, wobei der Körper jeder Speiche (2) einen Hauptkörperteil (3) aufweist, der mit einer Außenfläche des Nabenteils (12) verbunden ist und sich von dem Nabenteil (12) zum Randteil (13) erstreckt, wobei der Hauptkörperteil (3) in zwei Arme (4) in einer Richtung zum Randteil (13) verzweigt ist, wobei sich jeder der Arme (4) von dem Hauptkörperteil (3) zum Randteil (13) erstreckt und mit der Innenfläche (5) des Randteils (13) verbunden ist, wobei jeder der zwei Arme (4) an der Innenfläche (5) des Randteils an einem Befestigungspunkt (6) befestigt ist, wobei sich eine erste radiale Linie durch einen Mittelpunkt (c) des Walzenrings (1) und einen Befestigungspunkt (6) erstreckt und eine zweite radiale Linie sich durch den Mittelpunkt des Walzenrings (1) und den anderen Befestigungspunkt (6) erstreckt, wobei die erste und die zweite radiale Linie einen Winkel (α) zwischen den zwei Befestigungspunkten (6) bilden, der von 23 Grad bis 28 Grad reicht, **dadurch gekennzeichnet, dass** jede Speiche (2) Y-förmig ist.

2. Landwirtschaftlicher Walzenring (1) nach Anspruch 1, **dadurch gekennzeichnet, dass** die Anzahl von Speichen (2) von 2 bis 10 Speichen (2) reicht.

3. Untergrundpacker (7), **dadurch gekennzeichnet, dass** der Untergrundpacker (7) einen Satz (8) von landwirtschaftlichen Walzenringen (1) nach einem der vorstehenden Ansprüche umfasst, wobei die landwirtschaftlichen Walzenringe (1) drehbar um eine gemeinsame Mittelwelle (9) angebracht sind, die an einem Rahmen (11) des Untergrundpackers (7) angebracht ist.

## Revendications

1. Anneau de roulement agricole (1) pour comprimer le sol tout en poussant des cailloux rencontrés dans le sol, lequel anneau (1) comprend une partie moyeu (12) avec un trou central (15) pour recevoir un arbre (9), une partie bordure (13) avec une surface interne (5) faisant face à la partie moyeu (12) et une surface externe (14) configurée pour comprimer le sol tout en poussant des cailloux rencontrés dans le sol, et une pluralité de rayons (2), dans lequel chaque rayon (2) a un corps raccordant la partie moyeu (12) et la partie bordure (13), le corps de chaque rayon (2) a une partie corps principale (3) raccordée à une surface externe de la partie moyeu (12) et s'étendant depuis la partie moyeu (12) vers la partie bordure (13), la partie corps principale (3) est ramifiée en deux bras (4) dans une direction vers la partie bordure (13), chacun des bras (4) s'étendant depuis la partie corps principale (3) vers la partie bordure (13) et est raccordé à la surface interne (5) de la partie bordure (13), dans lequel chacun des deux bras (4) est fixé à la surface interne (5) de la partie bordure au niveau d'un point de fixation (6), un premier axe radial s'étend à travers un centre (c) de l'anneau de roulement (1) et un point de fixation (6) et un second axe radial s'étend à travers le centre de l'anneau de roulement (1) et l'autre point de fixation (6), dans lequel le premier et le second axes radiaux forment un angle (α) entre les deux points de fixation (6) qui s'échelonne de 23 degrés à 28 degrés, **caractérisé en ce que** chaque rayon (2) est en forme de Y.

2. Anneau de roulement agricole (1) selon la revendication 1, **caractérisé en ce que** le nombre de rayons (2) s'échelonne de 2 à 10 rayons (2).

3. Appareil à comprimer le terrain (7), **caractérisé en ce que** ledit appareil à comprimer le terrain (7) comprend un ensemble (8) d'anneaux de roulement agricoles (1) selon l'une quelconque des revendications précédentes, dans lequel les anneaux de roulement agricoles (1) sont montés de manière rotative autour d'un arbre central commun (9) monté sur un châssis (11) de l'appareil à comprimer le terrain (7).
